# EUROPEAN PATENT APPLICATION

(11) **EP 4 678 476 A1**
(43) Date of publication of application: **14.01.2026**
(21) Application number: 24187051.8
(22) Date of filing: 08.07.2024
(51) Int. Cl.: B60Q 3/54, B60Q 1/00, B60R 13/02, F21V 1/00, B60R 19/50, F21V 11/14, B32B 3/26

(54) **ILLUMINATED OR ILLUMINABLE COMPONENT AND VEHICLE COMPRISING SUCH A COMPONENT**

(71) Applicant: HELLA GmbH & Co. KGaA, 59552 Lippstadt (DE)
(72) Inventor: Kogovsek, Janez, 1000 Ljubljana (SI); Stajner, Tomaz, 1260 Ljubljana - Polje (SI); Matko, Borut, 3331 Nazarje (SI)
(74) Representative: Behr-Wenning, Gregor

(57) **Abstract**

The present invention relates to an illuminated or illuminable component (381, 382, 383, 384), comprising a light source (12, 121, 122) for providing light, a carrier layer (18) having a first surface (20) and a second surface (22), the first surface (20) facing the light source (12, 121, 122), an opaque masking layer (34) applied, wherein
- the carrier layer (18) is transparent or translucent and comprises a cover layer (24) applied to the second surface (22), wherein the cover layer (24) comprises a plurality of through holes (28) through which the light can pass, and/or
- the carrier layer (18) comprises a plurality of through holes (28) through which the light can pass,
the through holes (28) being coherently arranged over the entire component (381, 382, 383, 384) or a section thereof. Moreover, the present invention relates to a vehicle comprising such a component (381, 382, 383, 384).

## Description

The present invention relates to an illuminated or illumnable component and to a vehicle comprising such a component.

### PRIOR ART

The illumination of components offers many opportunities to provide the component with specific functions and with a particular desing. One particular issue is that a changeable visual appeal can be provided by changing the intensity and color of the illumination. The component can thereby also be used as a screen for displaying certain information. A specific text and/or a symbol can be displayed depending on definable conditions. This is in particular but not exclusively true for vehicle components, such as car body parts, trim parts, windows etc.

From a desing perspective, it is desirable that the elements needed to illuminate the illuminated or illuminable component were not at all be visible when switched-off ("off-state"). In other words, the surface of an illumnable or illuminate or illuminate component shall appear in the same way as the surface of a non-illuminated component. Hence, when switching the light on ("on state"), an appearance should be provided as if the light is "coming from nowhere".

Two main approaches have been developed to address this requirement. A common feature of both approaches is that the respective illuminated or illuminable component comprises a light source for providing light by which the component can be illuminated. Further, a carrier layer is provided to which the light provided by the light source is directed.

According to the first approach, at least one thin decorative layer is applied on the surface of the carrier layer facing away from the light source, the decorative layer being colored and translucent and not completely blocking the light. Hence, with high enough intensity, light can pass through the decorative layer. However, except for a few specific colors (e.g., white, black), the light passing through the decorative layer may shift in color which is problematic if for example the same illumination effect is desired for various versions of decoration (e.g., different bumper colors) or due to legal requirements (specific color of light required).

According to the second approach, an opaque decorative layer can be applied to the surface of the carrier layer facing away from the light source. The decorative layer can be structured, e.g., by laser removal of small areas (dots or through holes). These areas become translucent for light and can be used for light outcoupling. The areas, where the decorative layer is not removed, remain opaque and are blocking light. The opaque areas also retain the decorative function. However, the dotted areas and non-dotted areas are somewhat different to the observer. This means that the light outcoupling areas can be distinguished from the remaining surface and, hence, the light is not "coming from nowhere".

### DISCLOSURE OF THE INVENTION

It is one task of one embodiment of the present invention to present an illuminated trim part which comprises complex graphics but can at the same time be provided in a cost-effective way.

It is one task of one embodiment of the present invention to present an illuminated or illuminable component by which the drawbacks described aforehand can at least be reduced or even be eliminated. In particular, it is one task of one embodiment of the present invention to provide an illuminable or illuminated component by which the "light coming from nowhere effect" can be reached without color changes of the light exiting the component.

Furthermore, an embodiment of the present invention has the object to provide a vehicle that is equipped with such a component.

The task is solved by the features specified in claims 1 and 12. Advantageous embodiments are the subject of the dependent claims.

One embodiment of the present invention relates to an illuminated or illuminable component, comprising
- a light source for providing light,
- a carrier layer having a first surface and a second surface, the first surface facing the light source,
- an opaque masking layer applied
   ∘ to the first surface of the carrier layer, the masking layer forming gaps through which the light provided by the light source can enter the carrier layer via the first surface, and/or
   ∘ to the second surface of the carrier layer, the masking layer forming gaps through which the light provided by the light source can exit the carrier layer via the second surface,
- wherein
   ∘ the carrier layer is transparent or translucent and comprises a cover layer applied to the second surface, wherein the cover layer comprises a plurality of through holes through which the light can pass, and/or
   ∘ the carrier layer comprises a plurality of through holes through which the light can pass,
- the through holes being coherently arranged over the entire component or a section thereof.

One main idea of the present invention is to provide at least the visible surface of the component or defined sections thereof with the same structure which is mainly defined by the through holes irrespective of whether the light can enter and leave the through holes. In this regard, the term "coherent" is to be understood such that the holes are not arranged randomly but follow a certain order that is chosen according to the desired visual appearance. As a result, the appearance of the visible surface in the "off-state" is homogeneous. In particular, elements needed for the illumination of the component cannot be seen from outside. The same is true for the areas in which the light provided by the light source may exit the visible surface. When switched on, the light is leaving the component via some of the through holes. Thus, the "light coming from nowhere effect" can be obtained without a color change of the light exiting the component.

The carrier layer may be molded or made of a foil or a textile.

In another embodiment the number of through holes per area unit is either constant or changing. The number of holes per area unit may also be considered as a "through hole density". If the number of through holes remains constant within the component, a very high degree of homogeneity of the appearance is reached. However, a constant number of through holes does not necessarily mean that the holes are regularly arranged, have the same cross-sectional shape and/or the same size.

Alternatively or cumulatively, the number of through holes may change. As explained earlier, the through holes are arranged throughout the entire visible area although not all the area may be illuminated. Areas that are not illuminated may be provided with a lesser number of holes such that the manufacturing effort can be kept low without compromising the visual appearance. Moreover, the appearance of the component can be blended with the adjacent components without holes and/or without illumination.

According to another embodiment the through holes are arranged in a regular pattern. Within the present description, the term "regular" could be construed such that in particular the distance between adjacently arranged holes follow a certain regularity. That does not mean that the distance needs to be the same over the entire component but may increase and decrease,. A regular pattern adds to the homogeneity of the appearance of the visible surface.

In a further embodiment are arranged in a matrix shape. Thus, the through holes are arranged in columns and rows and thus with a high degree of regularity, thereby providing an appearance of high degree of homogeneity.

A further embodiment defines that the through holes have a circular, elliptical or a polygonal cross-sectional shape. A visual appearance does not depend on the cross-sectional shape of the through holes. However, a specific appearance may be obtained by a particular cross-sectional shape. It may also be possible to choose two or more different cross-sectional shapes to provide a particular appearance. The size of the through holes in this embodiment is chosen such that the through holes are conceivable by the eye of an observer. However, the size can be reduced to a degree that an individual hole may still be conceivable to the eye of the observer, but only from a small distance. Seen from a bigger distance, a particular optical effect may be obtained. Another aspect is that if the diameter of the through holes is very small, one may obtain a color shift of the light provided by the light source which could be desirable to provide a certain optical effect. Still, also in this case, areas comprising through holes appear differently compared to areas void of through holes.

In a further embodiment the masking layer is applied to the second surface and the gap is formed by a plurality of through holes. The first surface is the surface facing to the light source while the second surface is the one facing away from the light source. The masking layer is typically opaque such that a gap is needed to allow the light to pass therethrough. The gap is usually formed by one big coherent hole. Nevertheless, such a coherent hole may adversely affect the visual appearance of the component when the masking layer is applied to the second surface. By forming the gap by a plurality of through holes, a homogeneous appearance of the visible surface of the component is obtained. Beyond that, the manufacturing complexity can be kept low as the entire second surface can be treated in the same way.

In a further embodiment, at least one further layer is applied to the masking layer and/or at least one further layer is applied
- on the second surface between the carrier layer and the cover layer,
- the further layer is transparent and/or
- the through holes extend into the further layer.

According to another embodiment the cover layer has a front surface facing away from the light source and at least one further layer applied to the front surface, wherein
- the further layer is transparent and/or
- the through holes extend into the further layer.

In all of these embodiments, the component comprises a further layer. The design of the further layer depends on its arrangement. If it is applied to the masking layer, it is not necessary to provide the further layer with the through holes and/or to make the further layer transparent or translucent. If applied on the second surface or on any of the layer applied to the second surface or between them, the further layer is provided with the through holes and/or is transparent or translucent as long as no masking layer is applied on the second surface or on layers applied to the second surface.

In this embodiment the cover layer is applied to the second surface of the carrier layer, i.e., the surface facing away from the light source. The cover layer is provided with a plurality of through holes. The further layer that is applied to the front surface of the cover layer is transparent and/or is provided with the same through holes as the cover layer. In other words, the through holes extend through the cover layer and the further layer. The homogeneous appearance is also obtained in this embodiment. The further layer may for example have decorative and/or graphical elements.

According to another embodiment the further layer is a functional layer. Such a functional layer may be provided by a low-adhesion layer, a hydrophobic/hydrophilic layer, an oleophobic/oleophilic layer, and/or an antireflective layer, to name a few.

In a further embodiment the functional layer is a heating layer. A heating layer may be a layer comprising heating wires, electrically conductive elements, thin film providing resistive heating or material increasing the temperature of the surrounding material, to name a few examples.

The component may be heated for several reasons. One reason may be the comfort for a vehicle passenger when the component is embodied as an armrest or a seat. Another reason may be that ice may form on the visible surface in case the component is embodied as an external vehicle trim part. The ice may adversely affect the appearance of the visible surface of the component. By means of the heating layer, the ice can be removed within a short time.

A further embodiment defines that the functional layer is a protective layer. A protective layer may be a hard coat or the like by which the visible surface can be protected against outer influences like wear, weather impacts or mechanical impacts like stone-chipping and/or chemical impact.

In another embodiment, the functional layer is a light-affecting layer. The light-affecting layer changes the properties of the light provided by the light source in a defined way. Examples may be that the light-affecting layer causes light-spreading, light diffusing or light color changing. The light-affecting layer may also act as a light guide.

A further embodiment defines that the component is a vehicle component. As initially stated, illuminable or illuminated components are of particularly interest for the design of vehicles where they can be used for providing a distinctive, brand-specific design that may also be individualized to a certain degree. However, also in non-automotive applications, such components may beneficially be employed such as in trains, ships, or planes. Such components may also be integrated into the wall of rooms of a house, mainly for design reasons.

In a further embodiment the component is an internal or external trim part of a vehicle. External trim parts may as an example be pillars, windows or bumpers, to name a few. As mentioned, the use of such components is particularly interesting in automotive applications. Internal trim parts may be door inlays, dashboards, armrests, seats and headliners. External trim parts are in particular bumpers with indicator function or illuminated front grilles.

A further aspect of the invention relates to a vehicle comprising an illuminated or illuminable component according to one of the preceding embodiments. The technical effects and advantages as discussed with regard to the present component to a large extent equally apply to the vehicle. Briefly, a "light coming from nowhere effect" can be obtained without a color change of the light exiting the component.

### PREFERRED EMBODIMENTS OF THE INVENTION

The present invention is described in detail with reference to the drawings attached wherein
- Figures 1A to 1C: are different views of a first example of an illuminated or illuminable component known from the prior art,
- Figures 2A to 2C: are different views of a second example of an illuminated or illuminable component known from the prior art,
- Figures 3A to 3C: are different views of a first embodiment of an illuminated or illuminable component according to the present invention,
- Figure 4 is: a principle sectional view of a second embodiment of an illuminated or illuminable component according to the present invention,
- Figure 5 is: a principle sectional view of a third embodiment of an illuminated or illuminable component according to the present invention,
- Figure 6 is: a principle top view of a fourth embodiment of an illuminated or illuminable component according to the present invention, and
- Figure 7: is a principle top view of a fifth embodiment of an illuminated or illuminable component according to the present invention.

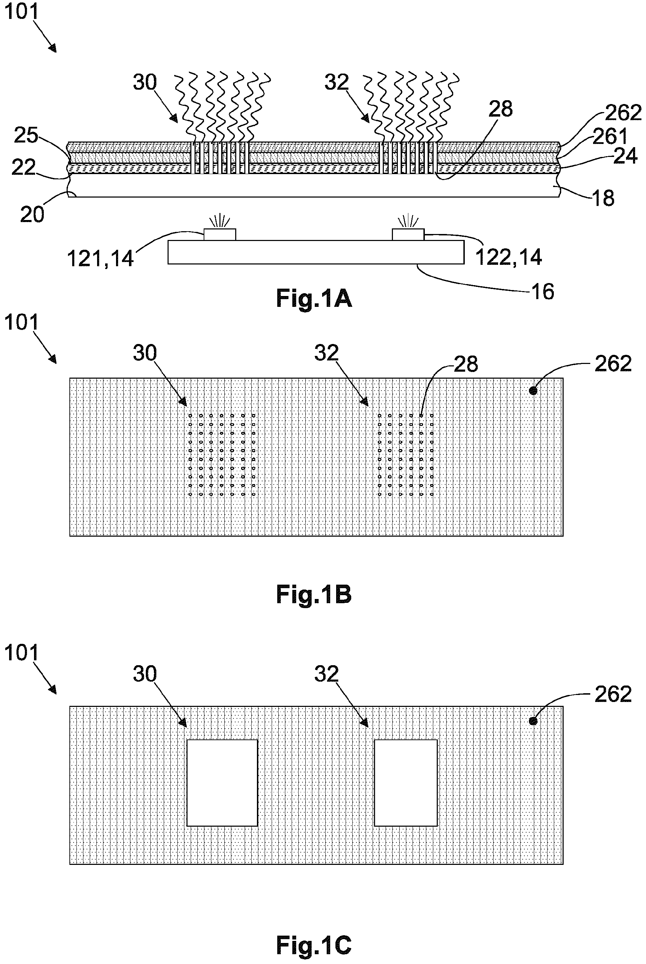

Figure 1A is a principle sectional view through a first example of an illuminable or illuminated component 101 known from the prior art. The component 101 comprises a first light source 121 and a second light source 122 that provide light for the illumination. In this case the light source 12 comprises two LEDs 14 that are positioned on a printed circuit board 16. However, other ways for the design of the light source 12 are possible. The light source 12 may be located remote from the component 101 and connected to a light guide that has a plurality of light-outcoupling sections where the light introduced into the light guide can exit the same (not shown).

Moreover, the component 101 comprises a carrier layer 18 having a first surface 20 and a second surface 22. The first surface 20 is facing the light source 12 while the second surface 22 is facing away from the light source 12. An opaque cover layer 24 is applied to the second surface 22 of the carrier layer 18. The cover layer 24 forms a front surface 25 that is facing away from the light source 12. A first further layer 261 is applied on the front surface 25 and a second further layer 262 is applied to the first further layer 261. The first further layer 261 and the second further layer 262 may be colored or provided with a certain graphical element and may be transparent, translucent or opaque.

A plurality of through holes 28 is penetrating the cover layer 24, the first further layer 261 and the second further layer 262. The through holes 28 can be subdivided in a first group 30 and a second group 32. The first group 30 is associated to the first light sources 121, while the second group 32 is associated to the second light sources 122. The first group 30 and the second group 32 are surrounded by areas void of through holes 28. The term "associated" may be understood in a way that the light provided by the light source 12 primarily or exclusively penetrates the "associated" through holes 28.

When the light sources 12 are switched on, the light provided by the light sources 12 is running through the carrier layer 18, penetrates the through holes 28 and then exits the component 101.

Figure 1B is a principle top view on the component 101 shown in Figure 1A in an "off-state" in which the light sources 12 are switched off. The observer looks at the second further layer 262. It is evident from Figure 1B that the first group 30 of through holes 28 and the second group 32 of through holes 28 are clearly distinguishable from the remaining second further layer 262. Thus, the component 101 does not have a homogeneous visual appearance when in the "off-state".

Figure 1C is also a principle top view and shows the component 101 381 in the "on-state". The component 101 is homogenously illuminated within first group 30 and the second group 32.

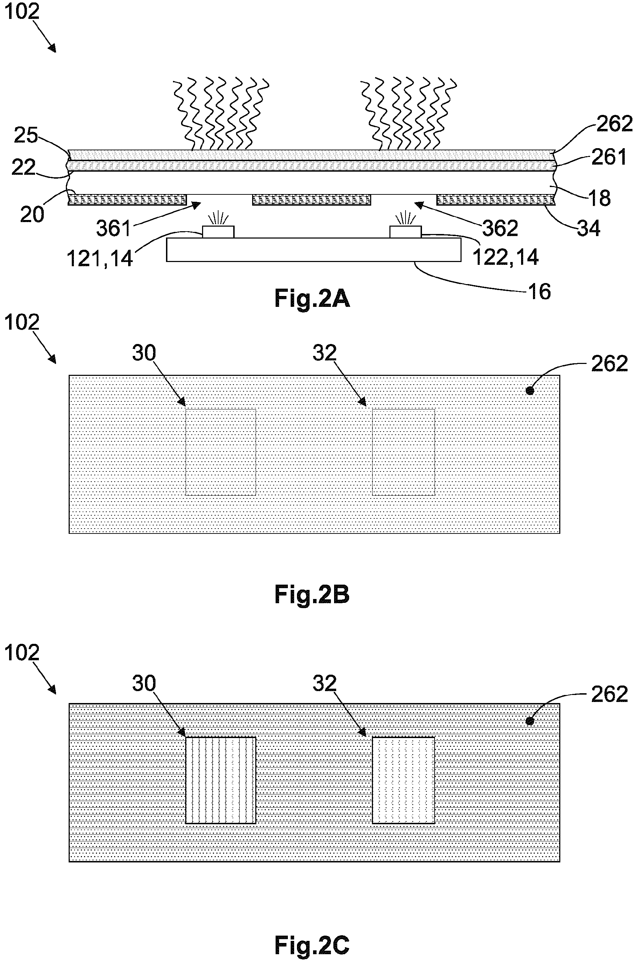

In Figure 2A a second example of the component 102 known from the prior art is shown by a principle sectional view. In this case, an opaque masking layer 34 is applied to the first surface 20 of the carrier layer 18. The opaque masking layer 34 forms a first gap 361 and a second gap 362, the first gap 361 being associated with the first light sources 121 and the second gap 362 being associated with the second light sources 122. A first further layer 261 is applied on the front surface 25 of the carrier layer 18 and a second further layer 262 is applied to the first further layer 261. The first further layer 261 and the second further layer 262 may be transparent or translucent but not opaque. As evident from Figure 2B, the light sources 12 may be visible from outside. Moreover, the color of the light is changed when the light passes through the first further layer 261 and the second further layer 262.

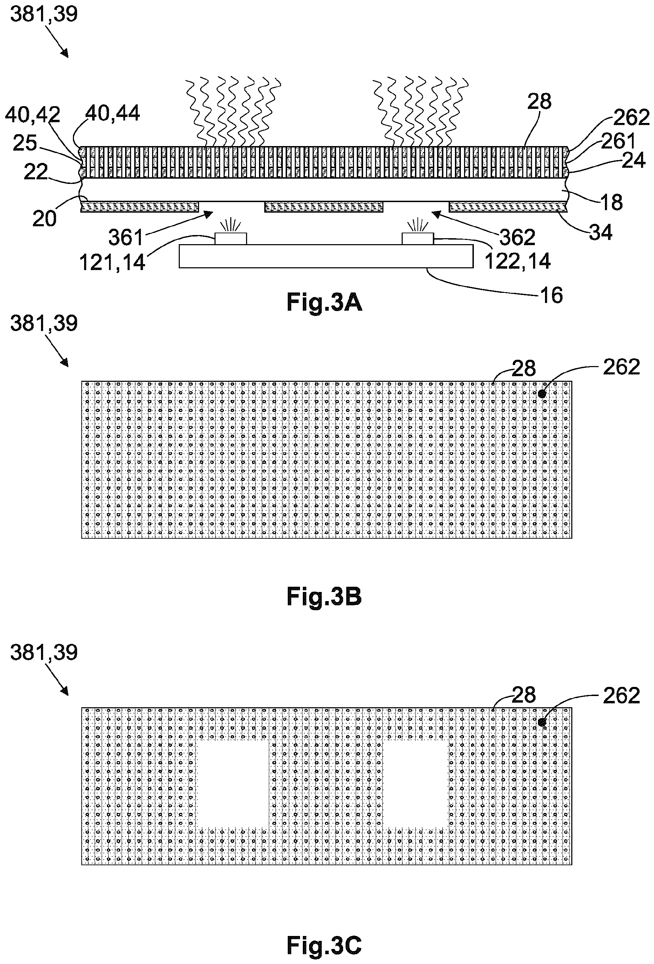

Figure 3A is a sectional view through a first example of an illuminated or illuminable component 381 according to the invention. The component 381 may be an internal or external trim part 39 of a vehicle or the like (not shown). As in the first example shown in Figure 1 A, a masking layer 34 is applied to the first surface 20 of the carrier layer 18. A cover layer 24 is applied to the second surface 22 of the carrier layer 18. A first further layer 261 is applied on the front surface 25 of the cover layer 24 and a second further layer 262 is applied to the first further layer 261.

A plurality of through holes 28 is penetrating the cover layer 24, the first further layer 261 and the second further layer 262, both of which are functional layers 40. In the embodiment shown in Figure 3A, the first further layer 261 is a heating layer 42 and the second further layer 262 is a protective layer 44.

The through holes 28 are coherently distributed over the entire carrier layer 18 although the through holes 28 do not extend into the carrier layer 18. In other words, the through holes 28 cannot be divided into a first group 30 and a second group 32 as is the case in the first example of the component 381 known from the prior art and shown in Figure 1A. As a result, in the "off-state" the second further surface has a very homogenous appearance as evident from Figure 3B. The light sources 12 can hardly be recognized from the exterior.

When turned on, the light provided by the light source 12 only runs through some of the through holes 28, thereby providing the desired illumination. Thus, the component 381 can provide the desired "light coming from nowhere effect" without a color change of the light exiting the component 381 (see Figure 3C).

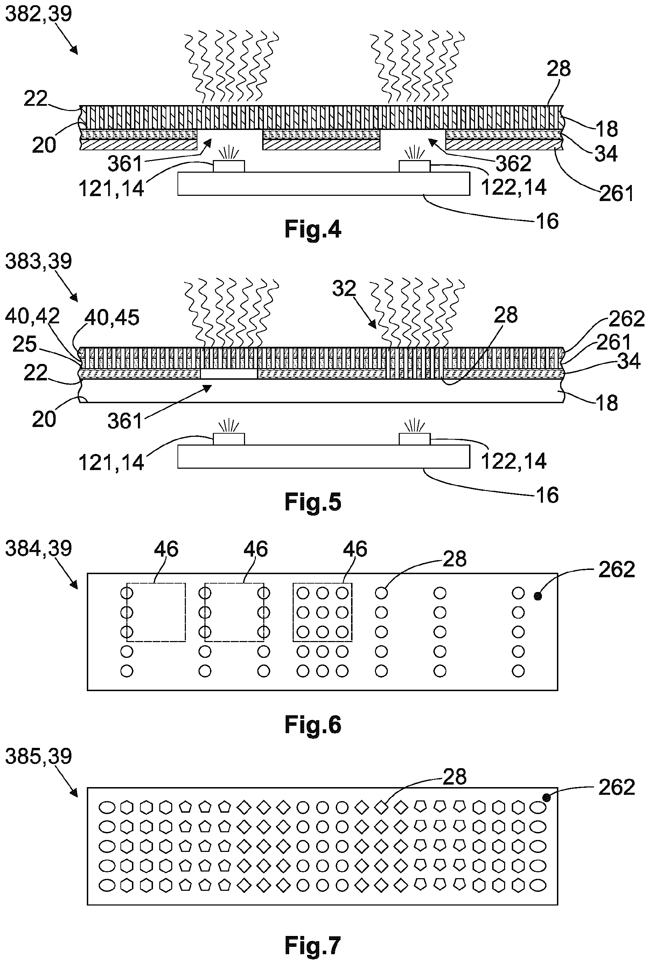

In Figure 4 a second embodiment of the component 382 according to the invention is shown by means of a sectional view along the lines of the one shown in Figure 3A. In the second embodiment shown in Figure 4, no further layers 261, 262 and no cover layer 24 are applied to the carrier layer 18. The carrier layer 18 is opaque and is perforated with the through holes 28 that are evenly distributed over the entire carrier layer 18. The masking layer 34 is applied on the first surface 20 of the carrier layer 18. One first further layer 261 is applied on the masking layer 34. In contrast to the first embodiment of the component 381 shown in Figures 3A to 3C, the first further layer 261 does not comprise the through holes 28.

The appearance of the component 382 according to the second embodiment in the "on-state" and the "off-state" is similar to the ones shown in Figures 3B and 3C.

Figure 5 shows a third embodiment of the component 383 according to the present invention by means of a sectional view. In this embodiment of the component 383, the masking layer 34 is applied to the second surface 22 of the carrier layer 18. The first further layer 261 is applied to the masking layer 34 and the second further layer 262 is applied to the first further layer 261. The second further layer 262 is embodied as a light-affecting layer 45 and may cause a color shift, a light spreading, a light diffusion or the like. There is no separate cover layer 24.

The masking layer 34 forms a first gap 361 that is associated with the first light sources 121. The first gap 361 is formed by one coherent hole. The first further layer 261 and the second further layer 262 are perforated by a plurality of through holes 28.

The through holes 28 associated with the second light sources 122, however, also penetrate the masking layer 34. As a result, the second gap 362 associated with the second light sources 122 is formed by these through holes 28 and thus not by a coherent hole.

Figure 6 is a top view of a fourth embodiment of the component 384 according to the present invention. The basic construction may be the same as in the first, second or third embodiment. The through holes 28 are arranged in a matrix shape, however, the distance of two adjacent rows is gradually changing. In the center the distance is small and is increasing towards the lateral margin of the component 384. In Figure 6 in total three area units 46 are shown that are of the same size. Although they are of the same size, the number of through holes 28 within these area units 46 which may also be considered as a "through hole density" is different. Although the obtained visual appearance is not homogenous over the entire visible surface, the appearance follows a certain regularity which may be considered as pleasant by a given observer. It should be noted that a constant or changing number of through holes 28 within the area units 46 may also be reached when the through holes 28 are randomly arranged within the component 384. Still, the desired visual appearance may be obtained.

Figure 7 is a top view of a fifth embodiment of the component 385 according to the present invention. The basic construction may be the same as in the first, second or third embodiment. However, the size and the cross-sectional shape of the through holes 28 is changing throughout the component 385. Again, the through holes 28 are arranged in a matrix shape. Within one column, the cross-sectional shape of the through holes 28 remains the same. The through holes 28 of some columns have an elliptical or circular cross-sectional view, while the through holes 28 of other columns have a polygonal shape. Again, the visual appearance so obtained is not homogenous, however, follows a certain order which may also be considered as pleasant by a given observer.

### REFERENCE LIST

- 101 - 102: component of the prior art
- 12, 121, 122: light source
- 14: LED
- 16: printed circuit board
- 18: carrier layer
- 20: first surface
- 22: second surface
- 24: cover layer
- 25: front surface
- 261, 262: further layer
- 28: through hole
- 30: first group
- 32: second group
- 34: masking layer
- 361,362: gap
- 381 - 385: component according to the invention
- 39: trim part
- 40: functional layer
- 42: heating layer
- 44: protective layer
- 45: light-affecting layer
- 46: area unit

## Claims

1. Illuminated or illuminable component (381, 382, 383, 384), comprising
- a light source (12, 121, 122) for providing light,
- a carrier layer (18) having a first surface (20) and a second surface (22), the first surface (20) facing the light source (12, 121, 122),
- an opaque masking layer (34) applied
∘ to the first surface (20) of the carrier layer (18), the masking layer (34) forming gaps (361, 362) through which the light provided by the light source (12, 121, 122) can enter the carrier layer (18) via the first surface (20), and/or
∘ to the second surface (22) of the carrier layer (18), the masking layer (34) forming gaps (361, 362) through which the light provided by the light source (12, 121, 122) can exit the carrier layer (18) via the second surface (22),
- wherein
∘ the carrier layer (18) is transparent or translucent and comprises a cover layer (24) applied to the second surface (22), wherein the cover layer (24) comprises a plurality of through holes (28) through which the light can pass, and/or
∘ the carrier layer (18) comprises a plurality of through holes (28) through which the light can pass,
- the through holes (28) being coherently arranged over the entire component (381, 382, 383, 384) or a section thereof.

2. Illuminated or illuminable component (381, 382, 383, 384) according to claim 1, **characterized in that** the number of through holes (28) per area unit (46) is
- either constant and/or
- changing
within the component (381, 382, 383, 384).

3. Illuminated or illuminable component (381, 382, 383, 384) according to one of the claims 1 or 2,
**characterized in that** the through holes (28) are arranged in a regular pattern.

4. Illuminated or illuminable component (381, 382, 383, 384) according to one of the claims 1 or 2,
**characterized in that** the through holes (28) are arranged in a matrix shape.

5. Illuminated or illuminable component (381, 382, 383, 384) according to one of the previous claims,
**characterized in that** the through holes (28) have a circular, elliptical or a polygonal cross-sectional shape.

6. Illuminated or illuminable component (381, 382, 383, 384) according to one of the previous claims,
**characterized in that** the masking layer (34) is applied to the second surface (22) and the gap (361, 362) is formed by a plurality of through holes (28).

7. Illuminated or illuminable component (381, 382, 383, 384) according to one of the previous claims,
**characterized in that**
- at least one further layer (261, 262) is applied to the masking layer (34) and/or
- least one further layer (261, 262) is applied
∘ on the second surface (22) between the carrier layer (18) and the cover layer (24),
∘ the further layer (261, 262) is transparent and/or
∘ the through holes (28) extend into the further layer (261, 262), and/or
- the cover layer (24) has a front surface (25) facing away from the light source (12, 121, 122) and at least one further layer (261, 262) applied to the front surface (25), wherein
∘ the further layer (261, 262) is transparent and/or
∘ the through holes (28) extend into the further layer (261, 262).

8. Illuminated or illuminable component (381, 382, 383, 384) according to claim 7, **characterized in that** the further layer (261, 262) is a functional layer (40).

9. Illuminated or illuminable component (381, 382, 383, 384) according to claim 8, **characterized in that** the functional layer (40) is
- a heating layer (42), and/or
- a protective layer (44), and/or
- a light-affecting layer (45).

10. Illuminated or illuminable component (381, 382, 383, 384) according to one of the preceding claims,
**characterized in that** the component (381, 382, 383, 384) is a vehicle component (381, 382, 383, 384).

11. Illuminated or illuminable component (381, 382, 383, 384) according to claim 10, **characterized in that** the component (381, 382, 383, 384) is an internal or external trim part (39) of a vehicle.

12. Vehicle, comprising an illuminated or illuminable component (381, 382, 383, 384) according to one of the preceding claims.
